# EUROPÄISCHE PATENTSCHRIFT

(11) **EP 0 732 388 B1**
(45) Veröffentlichungstag und Bekanntmachung des Hinweises auf die Patenterteilung: **12.04.2000**
(21) Anmeldenummer: 96100272.2
(22) Anmeldetag: 10.01.1996
(51) Int. Cl.: C09K 21/12, B32B 17/10, C03C 27/12

(54) **Gelbildner, Brandschutzgele und Brandschutzgläser**
Gel former, fire-resistant gel and fire-resistant glass units
Formateur de gel, gel résistant au feu et unités de verre anti-feux

(30) Priorität: 23.01.1995 DE 19501839; 02.02.1995 DE 19503283
(43) Veröffentlichungstag der Anmeldung: 18.09.1996
(73) Patentinhaber: BAYER AG, 51368 Leverkusen (DE); Schott Glas, 55122 Mainz (DE); Carl Zeiss Stiftung Trading as Schott Glaswerke, 55122 Mainz (DE)
(72) Erfinder: von Bonin, Wulf, Dr., D-51519 Odenthal (DE); Leroux, Roland, Dr., D-55271 Stadecken-Elsheim (DE); Steigenberger, Markus, D-65474 Bischofsheim (DE); Karschti, Thomas, D-55257 Budenheim (DE); Ring, Markus, D-67593 Westhofen (DE)
(74) Vertreter: Zobel, Manfred, Dr.

(56) Entgegenhaltungen:
- EP-A- 0 596 322
- EP-A- 0 596 324
- DE-A- 4 140 966
- FR-A- 2 382 959

## Beschreibung

Die EP-A-0 596 324 beschreibt Gelbildner und die EP-A-01 596 322 Brandschutzgläser, die aus solchen Gelbildnern erhaltene Gele enthalten, wobei die Gelbildner dadurch gekennzeichnet sind, daß sie a) saure Aluminiumphosphate, gegebenenfalls in Form von Umsetzungsprodukten mit 0,01 bis 4 Molen Alkanolamin pro Mol Aluminiumphosphat und b) Umsetzungsprodukte von Borsäure mit Alkanolaminen enthalten, wobei a) und b), gerechnet als Feststoffe, im Gewichtsverhältnis 100:50 bis 100:0,5 vorliegen. Bevorzugt sind dabei Gelbildner, die ca. 0,5 bis 85 Gew.-% Wasser und Aluminium, Bor, Phosphor und Alkanolamin in atomaren bzw. molaren Verhältnissen von 1 zu 1,2 bis 1,8 zu 2,3 bis 3,7 zu 2,3 bis 3,7 enthalten. Zusätzlich zu Aluminiumverbindungen können bis zu 20 Mol-%, bezogen auf Aluminium, Metallverbindungen eingesetzt werden, z.B. solche aus der ersten Hauptgruppe des Periodensystems der Elemente. Das entspricht einem Atomverhältnis von Aluminium zu zusätzlichem Metall von 1 zu 0,0 bis 0,2.

Diese bekannten Gclbildner weisen pH-Werte im Bereich 5 bis 6 auf und benötigen Gelierzeiten von 3 bis 80 Stunden bei 45 bis 120°C, vorzugsweise von 10 bis 40 Stunden bei 60 bis 95°C.

Es hat sich gezeigt, daß diese bekannten Gelbildner hinsichtlich ihrer Temperaturbeständigkeit und Haftfestigkeit an Glas nicht voll befriedigen. Zusätze von Alkalihydroxiden im Bereich bis zu 20 Mol-% (bezogen auf Aluminium) führen zu einer starken Verlängerung der an sich schon langen Gelierzeiten (siehe Beispiel 2, Probe B).

Weiterhin hat sich gezeigt, daß für die Anwendung in Brandschutzgläsern eine mittlere Intumeszenzfähigkeit der Gele besser ist, als eine möglichst hohe Intumeszenzfähigkeit, da bei zu starkem Aufschäumen im Brandfall die Gefahr eines vorzeitigen Berstens von Brandschutzverglasungen besteht. Bei den bekannten Gelen ist solch ein vorzeitiges Bersten nicht immer auszuschließen.

Die bekannten Gele zeigen im Bereich 300 bis 500°C eine gute Schmelzbeständigkeit. Bei tieferen Temperaturen kann jedoch unerwünschtes Schmelzen erfolgen, was zu einem vorzeitigen Wegfließen des Gels führen kann, wenn im Brandfall höhere Temperaturen an Brandschutzgläsern erst nach längerer Zeit auftreten.

Aus der DE-A-4 140 966 sind Dichtungsmaterialien bekannt geworden, die sich durch gute Temperaturbeständigkeit auszeichnen, an die hinsichtlich ihrer Transparenz und Wärmeisolierungsvermögen jedoch keine Ansprüche gestellt werden.

Es wurden nun Gelbildner gefunden, die
a) saure Aluminiumphosphate, gegebenenfalls in Form von Umsetzungsprodukten mit 0,01 bis 4 Mol Alkanolamin pro Mol Aluminiumphosphat und
b) Umsetzungsprodukte von Borsäure mit Alkanolaminen enthalten,
die dadurch gekennzeichnet sind, daß a) und b), gerechnet als Feststoffe, im Gewichtsverhältnis 100:95 bis 100:0,5 vorliegen und sie zusätzlich Alkaliverbindungen in einem Atomverhältnis von Aluminium zu Alkalimetall von 1 zu 1,3 bis 2,5 enthalten.

Vorzugsweise enthalten erfindungsgemäße Gelbildner 0,5 bis 85, insbesondere 20 bis 50 Gew.-% Wasser.

Weiterhin sind Gelbildner bevorzugt, die Aluminium, Bor, Phosphor, Alkanolamin und Alkali in atomaren bzw. molaren Verhältnissen von 1 zu 1,2 bis 1,8 zu 2,7 bis 3,3 zu 2,7 bis 3,3 zu 1,4 bis 2,2 enthalten.

Vorzugsweise setzt man als Reaktionskomponenten für die Herstellung erfindungsgemäßer Gele Aluminiumhydroxid, o-Phosphorsäure, o-Borsäure, Monoethanolamin und Alkalihydroxid ein.

Erfindungsgemäße Gelbildner kann man z.B. herstellen, indem man zunächst einen Gelbildner entsprechend EP-A 1 596 324 herstellt (im folgenden auch als Vorprodukt bezeichnet) und diesem bei 10 bis 100°C die Alkaliverbindung in der gewünschten Menge zufügt. Vorzugsweise arbeitet man dabei bei 20 bis 60°C, unter gutem Rühren und mit 50 bis 70, insbesondere 30 bis 55 gew.-%igen, wäßrigen Lösungen der Alkaliverbindungen.

Erfindungsgemäße Brandschutzgele sind erfindungsgemäße Gelbildner in gelierter Form. Erfindungsgemäße Brandschutzgele kann man z.B. herstellen, indem man erfindungsgemäße Gelbildner auf 50 bis 120° C erhitzt. Vorzugsweise erhitzt man auf 50 bis 100°C, insbesondere 70 bis 95°C. Die Gelierung erfolgt im allgemeinen in einer Zeit zwischen 30 Minuten und 2,5 Stunden. Es ist vorteilhaft, die Gele danach noch einige Zeit reifen zu lassen, d.h. beispielsweise noch 10 bis 20 Stunden auf erhöhter Temperatur zu halten. Die Wärmezufuhr zur Gelierung und gegebenenfalls Reifung kann z.B. in einem Umluftofen oder durch Mikrowellen oder Wechselfelder erfolgen. Auch wenn die gesamte Behandlungszeit nicht unbedingt kürzer ist als bisher, so verliert der Gelbildner doch in kürzerer Zeit seine Fließfähigkeit.

Erfindungsgemäße Brandschutzgläser enthalten erfindungsgemäße Brandschutzgele. Erfindungsgemäße Brandschutzgläser kann man z.B. herstellen, indem man die zuvor beschriebene Gelierung und gegebenenfalls Reifung erfindungsgemäßer Gelbildner zwischen den Scheiben eines aus zwei oder mehreren Scheiben bestehenden Scheibenverbundes ablaufen läßt.

Erfindungsgemäße Gelbildner kann man beispielsweise herstellen, indem man zunächst eine zur Aluminiumphosphat-Bildung befähigte Aluminiumverbindung, insbesondere Aluminiumhydroxid und eine zur Aluminiumphosphat-Bildung befähigte Phosphorverbindung, insbesondere o-Phosphorsäure, im gewünschten Atomverhältnis von Aluminium zu Phosphor in Gegenwart von Wasser bei beispielsweise 70 bis 120°C zu einer Aluminiumphosphatlösung umsetzt. Diese kann beispielsweise einen Feststoffgehalt von mindestens 40 Gew.-%, vorzugsweise von 70 bis 85 Gew.-% aufweisen. Vorzugsweise läßt man diese Lösung mindestens 4, besser 10 bis 40 Stunden bei 10 bis 40°C stehen. Separat davon kann man dann eine zur Alkanolaminsalz-Bildung befähigte Borverbindung, insbesondere o-Borsäure, und ein Alkanolamin, insbesondere Ethanolamin, im gewünschten Verhältnis von Boratomen zu Alkanolamin-Molen (z.B. 2 Mole Alkanolamin pro Boratom) in Gegenwart von Wasser zusammenbringen und dieser Lösung die, vorzugsweise gealterte, Aluminiumphosphatlösung im gewünschten Verhältnis zusetzen. Unter mäßiger Erwärmung auf beispielsweise 50 bis 85°C entsteht dann ein Vorprodukt erfindungsgemäßer Gelbildner. Dieses ist nach Abkühlung auf z.B. unter 45°C gut lagerfähig und niedrigviskos.

Aus dem Vorprodukt kann man erfindungsgemäße Gelbildner durch Zufügen von Alkaliverbindungen in der oben angegebenen Weise erhalten.

Wenn die Gelbildung bei Temperaturen über 100°C durchgeführt wird kann es gegebenenfalls erforderlich werden, die Gelierung in einem geschlossenen System durchzuführen. Man kann die Gelbildung direkt mit frisch hergestelltem Gelbildner durchführen. Es ist aber bevorzugt, den Gelbildner vor der Gelbildung mindestens 24 Stunden bei Raumtemperatur zu lagern.

Die Bor-Alkanolamin-Lösung kann beispielsweise 40 bis 100 Gew.-% Feststoffe enthalten und die Aluminiumphosphatlösung wird vorzugsweise, gegebenenfalls nach entsprechender Verdünnung, ebenfalls als 40 bis 75 Gew.-% Feststoffe enthaltende Lösung mit der Bor-Alkanolamin-Lösung zusammengebracht.

Man kann die einzelnen Komponenten auch auf andere Weise zusammengeben, etwa dann, wenn man ganz oder teilweise kontinuierlich und/oder in einem Eintopfverfahren arbeiten will. Beispielsweise kann man zunächst eine Umsetzung der Aluminiumphosphatlösung mit dem Alkanolamin vornehmen und dann die Borverbindung hinzufügen oder zunächst die Bor- und/oder Phosphorverbindung mit einem Alkanolamin umsetzen und dann z.B. frisch gefälltes Aluminiumhydroxid hinzufügen.

Anstelle des vorzugsweise benutzten Zweitopfverfahrens, bei dem erst eine Aluminiumphosphatlösung und eine Bor-Alkanolamin-Salz-Lösung hergestellt und die beiden Lösungen dann durch Verrühren oder in einem kontinuierlich arbeitenden Mischaggregat vereinigt werden, können auch Eintopfverfahren angewendet werden.

Auch kann man bei der Gelbildnerherstellung zunächst mit hohen Feststoffkonzentrationen arbeiten und diese dann vor, während oder nach der Gelbildnerherstellung durch Verdünnen herabsetzen.

Gegebenenfalls kann man den Ausgangsprodukten zur Herstellung erfindungsgemäßer Gelbildner und/oder den erfindungsgemäßen Gelbildnern Zusatzstoffe hinzufügen, beispielsweise Tenside, Haftvermittler, Farbgeber, Porenkeimbildner, Füllstoffe, Lichtschutzmittel, Oxidationsschutzmittel und/oder Verstärker. Solche Zusatzstoffe sind an sich bekannt.

Erfindungsgemäße Gelbildner weisen bei Temperaturen bis zu ca. 40°C eine gute Lagerfähigkeit auf. Erfindungsgemäße Brandschutzgele bilden sich als klare, temperaturstabile Gele, die sich durch ein gutes mechanisches Stehvermögen auszeichnen und bei Temperaturen im Bereich 100 bis 600°C überraschenderweise nicht zum Fließen neigen.

Im Gegensatz zu den vorgenannten bekannten Gelbildnern, die keinen Zusatz von Alkaliverbindungen oder geringere als erfindungsgemäß erforderliche Mengen an Alkaliverbindungen enthalten, gelieren erfindungsgemäße Gelbildner z.B. bei 90°C schon in weniger als 2 Stunden, ohne dabei eine unzumutbar kurze Lagerfähigkeit bei Raumtemperatur zu haben. Die Lagerfähigkeit bei 20°C beträgt beispielsweise über einen Monat, wobei die Viskositäten noch unter denen der bekannten Gelbildner mit vergleichbarem Feststoffgehalt liegen. Die kürzeren Gelierzeiten haben den Vorteil, daß der Zustand mit flüssigem Gelbildner, der eine Fixierung der ihn enthaltenden Scheibenverbunde bedingt, nur kurze Zeit anhält.

Wie bereits ausgeführt, neigen erfindungsgemäße Brandschutzgele auch bei Temperaturen im Bereich 100 bis 300°C nicht dazu, eine fließende Schmelze zu bilden, die gegebenenfalls aus den bei Beflammung von Brandschutzverbundgläsern flammseitig zwangsläufig entstehenden Sprüngen der deckenden Glasscheiben herauslaufen kann. Dieses ist ein technisch wichtiger, überraschender Vorteil der erfindungsgemäßen Brandschutzgele.

Erfindungsgemäße Brandschutzgele weisen eine feinporige, mäßige Intumeszenz auf. Die erfindungsgemäßen Gelbildner haben relativ geringe Viskositäten, auch bei Feststoffkonzentrationen von über 60 Gew.-%. Auch bei Verdünnungen auf weniger als 40 Gew.-% Feststoffgehalt sind sie noch gelierfähig und weisen im allgemeinen etwas basischere pH-Werte auf als bekannte Gelbildner, z.B. solche zwischen 7 und 8,6. Erfindungsgemäße Brandschutzgele haben eine deutlich verringerte Rißbildungstendenz und neigen auch bei Temperaturen bis zu 180°C nicht zum Fließen, so daß der hydrostatische Druck von den Scheibenverbunden auch bei schwächeren Glasscheiben gut aufgefangen werden kann. Neben der guten Lagerungsbeständigkeit bei konstanten, auch erhöhten Temperaturen, haben erfindungsgemäße Brandschutzgele auch eine gute Wechseltemperaturbeständigkeit, beispielsweise bei zwischen -20, +20 und +80°C schwankenden Temperaturen. Schließlich sind die hohen F- und G-Standzeiten erwähnenswert, die erfindungsgemäße Brandschutzgläser aufweisen können.

Bei den erfindungsgemäßen Brandschutzgläsern kann zunächst ein bei Raumtemperatur lagerstabiler Gelbildner hergestellt werden, der dann nach Einfüllen zwischen die Glasscheiben ohne weitere Zusätze durch Erhitzen in kurzer Zeit in das stabile Gel überführbar ist. Bei erfindungsgemäßen Brandschutzgläsern ist im Brandfalle die Intumeszenz der Gele nicht so hoch, daß es zu vorzeitigem Bersten der Brandschutzverglasung kommt.

Die Summe dieser Vorteile der vorliegenden Erfindung stellt einen beträchtlichen technischen Fortschritt auf dem Gebiet des Brandschutzes dar.

Bei der Herstellung erfindungsgemäßer Brandschutzgele kann man gegebenenfalls zusätzlich zu oder anstelle des bevorzugten Aluminiumhydroxids auch andere Aluminiumverbindungen einsetzen, die sich in Aluminiumphosphate überführen lassen, beispielsweise Aluminiumoxide, Aluminiumoxidhydrate, Aluminiumsalze flüchtiger Säuren (etwa Aluminiumchlorid, -carbonate oder -acetate) und/oder Aluminiumborate.

Zusätzlich zu oder anstelle der bevorzugten o-Phosphorsäure kann man beispielsweise andere Phosphorverbindungen einsetzen, die sich in Aluminiumphosphate überführen lassen, beispielsweise dehydratisierte Formen der o-Phosphorsäure, Phosphoroxide, Phosphonsäuren, Phosphinsäuren, Phosphorsäureester und/oder Phosphorsäuresalze, letztere z.B. als Ammonium- und/oder Alkanolaminsalze.

Zusätzlich zu oder anstelle der bevorzugten o-Borsäure kann man gegebenenfalls andere Borverbindungen einsetzen, z.B. dehydratisierte Formen der o-Borsäure, Boroxide, Ammoniumborate und/oder Alkanolaminborate.

Zusätzlich zu oder anstelle des bevorzugten Ethanolamins kann man gegebenenfalls andere Alkoxylierungsprodukte des Ammoniaks wie Diethanolamin und/oder Triethanolamin einsetzen.

Als Alkaliverbindungen sind Alkalihydroxide, insbesondere in Form wäßriger Lösungen bevorzugt. Das Alkali in den Alkaliverbindungen ist vorzugsweise Natrium. Es kommen aber auch Lithium, Kalium und höhere Alkalimetalle in Betracht. Zusätzlich zu oder anstelle der bevorzugten Alkalihydroxide können auch andere Alkaliverbindungen eingesetzt werden, z.B. Oxide, Carbonate, Bicarbonate, Formiate, Acetate, Alkoholate, Borate und/oder Aluminate.

Als Gläser für erfindungsgemäße Brandschutzgläser kommen z.B. anorganische und organische Gläser des Standes der Technik in Frage.

Die Gelbildner können vor der Gelbildung gegebenenfalls verdünnt werden. Bevorzugt als Verdünnungsmittel ist Wasser, es ist auch ein Zusatz von organischen Lösungsmitteln, zumindest anteilsweise möglich, wobei die organischen Lösungsmittel, vorzugsweise mit Wasser mischbar, gegebenenfalls auch mit Wasser nicht mischbar sind.

Neben den schon genannten Zusatzstoffen kommen auch Zusätze von carbonisierenden Polyalkoholen, z.B. Zuckern, Glykolen, Glycerin, Pentaerythrit und/oder Polyvinylalkohole und sonstige wasserlösliche oligomere oder polymere Zusätze in Betracht. In speziellen Fällen, sofern keine klaren Gelschichten erforderlich sind, kann man auch Polymerdispersionen und/oder bevorzugt Kieselsole mit erfindungsgemäßen Brandschutzgelen oder Gelbildnern mischen. Haftvermittler, Tenside, Lichtschutzstabilisatoren, UV- und IR-Filtersubstanzen sowie farbgebende Zusätze werden gegebenenfalls z.B. unter 3 Gew.-%, vorzugsweise unter 1 Gew.-%, bezogen auf das erfindungsgemäße Brandschutzgel, zugesetzt. Füllstoffe und carbonisierende Zusätze können gegebenenfalls z.B. in Mengen von 1 bis 75 Gew.-%, vorzugsweise 20 bis 60 Gew.-%, bezogen auf die Gesamtmischung, zum Einsatz kommen.

Es ist ausgesprochen überraschend, daß beim Einsatz erfindungsgemäßer Mengen an Alkaliverbindungen sich die anwendungstechnischen Eigenschaften der Gelbildner, Brandschutzgele und Brandschutzgläser in so vorteilhafter Weise ändern, da bei geringeren Zusätzen von Alkaliverbindungen schwerwiegende anwendungstechnische Nachteile auftreten, insbesondere eine schlechtere Gelierfähigkeit.

Man kann erfindungsgemäße Gelbildner auch zur Herstellung von Hilfsmitteln, Werkstoffen und Bauelementen für den vorbeugenden Brandschutz verwenden, beispielsweise indem man saugfähige Substrate, etwa Pulver, Faserstoffe, Schaumstoffe, Cellulosewerkstoffe, Papiere, Vliese, Gewebe oder Gewirke mit erfindungsgemäßen Gelbildnern tränkt und dann, gegebenenfalls nach Formgebung, die Gelierung durchführt. Hierbei erhält man, ohne oder nach partieller oder vollständiger Trocknung, Materialien mit guter feuerabweisender Wirkung und intumeszentem, keramisierfähigem Charakter. Man kann so erfindungsgemäße Gelbildner beispielsweise zur Herstellung von Kabelschotts, Flammschutz-Umwickelungen, Hohlraumfüllungen, Abdichtungselementen und Feuersperren verwenden.

Man kann erfindungsgemäße Gelbildner auch als Zusätze oder Aufbaukomponenten bei der Herstellung von verbessert flammwidrigen Polyurethanschaumstoffen einsetzen.

Von Interesse im vorbeugenden Brandschutz oder bei der Herstellung von Formteilen oder Leichtwerkstoffen ist die Kombination erfindungsgemäßer Gelbildner und Brandschutzgele mit blähfähigen Materialien, z.B. blähfähigen Silikaten oder Graphiten in nicht, teilweise oder vollständig aufgeblähter Form z.B indem man solche Graphite und/oder Silikate mit erfindungsgemäßen Brandschutzgelen oder Gelbildnern versetzt und diese Mischung, gegebenenfalls einer Formgebung und/oder einer thermischen Nachbehandlung, z.B. zwischen 80 und 1000°C, unterzieht.

Man kann erfindungsgemäße Brandschutzgele auch in zerkleinerter Form oder Gelbildner in sprühgetrockneter oder nach dem Trocknen pulverisierter Form, massiv oder (infolge ihrer Intumeszenzeigenschaft) thermisch teilweise oder vollständig aufgeblähter Form als isolierende und feuerabweisende Hohlraumfüllung, als Füllstoff, als Beschichtung oder verpreßt zu Platten oder Formkörpern sonstiger Art einsetzen, vorzugsweise für Brandschutzzwecke.

Da die erfindungsgemäßen Gelbildner filmbildenden Charakter haben, sind sie nicht nur als Tränkmittel, sondern auch, insbesondere bei Wassergehalten von 10 bis 50 Gew.-%, als Lackierung oder Beschichtung von starren oder flexiblen Substraten geeignet und verleihen diesen, etwa Metallen (wie Aluminium), Hölzern, Geweben, Keramiken oder Kunststoffen, eine verbesserte Feuerwiderstandsfähigkeit.

Im folgenden wird die Erfindung beispielhaft erläutert. Die angegebenen Teile und Prozente beziehen sich auf das Gewicht, sofern nichts anderes vermerkt ist.

### Beispiele

### Beispiel 1

### Herstellung eines alkalifreien Vorproduktes (nicht erfindungsgemäß)

a) Herstellung einer Aluminiumphosphat-Lösung
   3045 Teile technische o-Phosphorsäure (85 %ig) wurden mit 726 Teilen Wasser auf 80°C erwärmt. Dann wurden unter Rühren kontinuierlich innerhalb einer Stunde 686,5 Teile Aluminiumhydroxid hinzugesetzt, bei 95°C 45 Minuten lang nachgerührt und dann abgekühlt.
b) Herstellung einer Borsäure-Alkanolaminsalz-Lösung
   1600 Teile Ethanolamin und 24 Teile Wasser wurden mit 742 Teilen technischer o-Borsäure bei 80°C verrührt. Nach 30 Minuten hatte sich eine klare Lösung gebildet. Danach wurde auf 40°C abgekühlt.
c) In die frisch gemäß b) hergestellte Lösung wurden kontinuierlich unter gutem Rühren im Laufe einer Stunde 4052 Teile gemäß a) hergestellte Lösung eindosiert. Dann wurde 2 Stunden bei 90°C nachgerührt und dann in 30 Minuten auf unter 40°C abgekühlt. Das erhaltene Vorprodukt (Lösung in Wasser, pH-Wert: 6,4) war farblos und klar und stellte eine ca. 69 %ige wäßrige Lösung dar.

### Beispiel 2

### Zusätze von Alkalihydroxid zum gemäß Beispiel 1 erhaltenen Vorprodukt

Jeweils 500 Teile des gemäß Beispiel 1 erhaltenen Vorprodukts wurden mit steigenden Mengen 50 %iger wäßriger Natronlauge bei 40°C verrührt (Einzelheiten siehe Tabelle 1).

Die verschiedenen Zubereitungen bildeten klare Lösungen. Sie wurden so in Reagenzgläser gefüllt, daß die Gläser zu ca. 20 Vol.-% gefüllt waren. Dann wurden die Gläser in Schräglage in einen Heizschrank gelegt (90°C), dort 24 Stunden belassen und beobachtet, wann die Gelierung eintrat (Einzelheiten siehe Tabelle 1).

Anschließend wurden die Gläser dem Heizschrank entnommen, senkrecht gestellt und ihr Inhalt bei Raumtemperatur beurteilt (Einzelheiten siehe Tabelle 1).

**Tabelle 1**

| Probe | Zusatz von wäßriger NaOH | | Gelierbeginn nach (M = Minuten, S = Stunden) | Zustand nach Entnahme aus dem Heizschrank und Abkühlung |
|---|---|---|---|---|
| | Teile | Atomverhältnis Al : Na | | |
| A | - | - | 6 S | klares, standstabiles Gel; rißfrei |
| B | 10 | 1 : 0,2 | 12 S | klares, standstabiles Gel; rißfrei |
| C | 20 | 1 : 0,4 | 31 S | klares, standstabiles Gel, rißfrei |
| D | 25 | 1 : 0,5 | - | trübe Flüssigkeit |
| E | 30 | 1 : 0,6 | - | trübe Flüssigkeit |
| F | 40 | 1 : 0,8 | - | trübe Flüssigkeit |
| G | 30 | 1 : 1 | - | klare Flüssigkeit |
| H | 60 | 1 : 1,2 | - | klare hochviskose Flüssigkeit |
| I | 70 | 1 : 1,4 | 5 S | klares, standstabiles Gel, rißfrei |
| K | 75 | 1 : 1,5 | 2 S | klares, standstabiles Gel, rißfrei |
| L | 80 | 1 : 1,6 | 80 M | klares, standstabiles Gel, nahezu rißfrei |
| M | 90 | 1 : 1,8 | 60 M | klares, standstabiles Gel; Risse |
| N | 100 | 1 : 2,0 | 40 M | klares, standstabiles Gel; Risse |

Die Proben A und B entsprechen dem Stand der Technik, die Proben C bis H dienen Vergleichszwecken und die Proben I bis N entsprechen erfindungsgemäßen Brandschutzgelen.

Aus Tabelle 1 ersieht man, daß gemäß dem Stand der Technik gute Gele nach relativ langer Zeit erhalten werden (Proben A und B). Bei steigenden Natronlaugezusätzen verlängert sich dann die Gelierzeit sehr stark (Probe C), anschließend wird gar keine Gelierung mehr erhalten (Proben D bis H). Ab Probe I treten dann wieder Gele auf, die nach sehr kurzer Zeit gelieren.

Die Anhebung der Alkalimenge (Atomverhältnis Aluminium zu Alkali bis 1 zu 1,2) führt also zunächst zunehmend zu unbrauchbaren Produkten. Völlig überraschend werden bei noch höheren Alkalimengen (Atomverhältnis Aluminium zu Alkali ab 1 zu 1,3) Produkte mit sehr günstigen anwendungstechnischen Eigenschaften erhalten.

### Beispiel 3

Die Schmelzbeständigkeit bei 160 bis 165°C von gemäß Beispiel 2 erhaltenen Gelen wurde wie folgt geprüft:

Eine Probe des jeweiligen Gels wurde so in ein Reagenzglas eingebracht, daß es in Senkrechtstellung des Reagenzglases an der Wand haftete und der Boden des Reagenzglases zum Teil frei war. Die Reagenzgläser wurden dann in senkrechter Position 5 Minuten lang einem 165°C heißen Luftstrom ausgesetzt. Schmelzende Gele sammelten sich dabei gut sichtbar am Boden des Reagenzglases.

Eine Prüftemperatur von 160 bis 165°C wurde deshalb gewählt, weil bei der Prüfung von Brandschutzgläsern im Brandofen gemäß DIN 4112 die flammabgewandte Seite der Prüfscheibe nicht heißer als 160°C werden soll. Das Gel sollte also bei 160°C möglichst nicht wegschmelzen.

Die Prüfergebnisse sind aus Tabelle 2 ersichtlich.

**Tabelle 2**

| Probe | Beobachtung |
|---|---|
| A | mäßiges, aber deutliches Schmelzen und Abfließen des Gels |
| B | etwas geringeres Abfließen des Gels als bei A |
| C | deutlich stärkeres Abschmelzen als bei A |
| I | deutlich geringeres und zäheres Abfließen als bei A |
| K | kein Abschmelzen, sondern nur Erweichung des Gels |
| L | kein Abschmelzen, nur geringfügiges Erweichen des Gels |
| M | kein Abschmelzen, kein Erweichen des Gels beobachtet |
| N | Gel zerspringt ohne zu Schmelzen |

Die Proben A und B entsprechen dem Stand der Technik, Probe C dient Vergleichszwecken, die Proben I bis N entsprechen erfindungsgemäßen Brandschutzgelen.

Aus einer Kombination der Tabellen 1 und 2 ersieht man, daß kurze Gelierzeiten zusammen mit geringer Schmelzneigung bei 160 bis 165°C nur erfindungsgemäß zusammengesetzte Brandschutzgele erreichen.

### Beispiel 4

Gemäß Beispiel 2 erhaltene Proben A und I bis N wurden in Prüfröhrchen jeweils auf 500°C erhitzt. Alle Proben ergaben feinporige Intumeszenzschäume. Die Proben I bis N schäumten weniger stark auf als die Probe A.

### Beispiel 5

### Erfindungsgemäßes Brandschutzglas und vergleichende Prüfung im Brandtest

Es wurden mit Silikon-Dichtungsmasse versiegelte Dreischeibenverbunde der Maße 50 x 50 x 1,5 cm hergestellt und senkrecht zwischen zwei Stahlplatten fixiert. Der Aufbau des Verbundes war: 3 mm Floatglas/3 mm Zwischenraum/3 mm Floatglas/3 mm Zwischenraum/3 mm Floatglas.
a) Die Zwischenräume des Verbundes wurden mit dem Gelbildner gefüllt, der der Probe A aus Beispiel 2 vor der Gelierung entsprach (Vergleichsversuch).
b) Die Zwischenräume eines zweiten Verbundes wurden mit dem Gelbildner gefüllt, der der Probe L aus dem Beispiel 2 vor der Gelbildung entsprach (erfindungsgemäß).

Beide Verbunde wurden in fixierter Form waagerecht in einen Heizschrank eingebracht und 20 Stunden bei 90°C getempert. Dann ließ man im Verlauf von 10 Stunden abkühlen. Die so hergestellten Brandschutzgläser waren klar durchsichtig. Durch das entstandene mechanisch-stabile Gel neigten sie auch nicht zu Verformungen durch einen hydrostatischen Druck der Füllungen.

Ein 50-maliger Temperatur-Wechsellagerungstest (jeweils 10 Stunden bei -10°C, Raumtemperatur und +80°C) ließ keine Beeinträchtigung der Verbundgläser erkennen.

### Vergleich:

Die beiden Verbunde 5a) und 5b) wurden nach 2-monatiger Lagerung bei Raumtemperatur in einen in Anlehnung an DIN 4102 mit der Einheits-Temperaturkurve betriebenen Kleinbrandofen eingebaut. Dann wurde der Beflammungsversuch gestartet. In beiden Fällen bekam die flammenseitige Glasscheibe nach 1 bis 2 Minuten Sprünge. Nach etwa 3 Minuten war jeweils eine Trübung der Scheibe deutlich erkennbar. Nach 26 Minuten war auf der flammenabgewandten Seite im unteren Scheibenbereich bei 5a) ein Abfließen und die Bildung schwimmender Blasen erkennbar, nach 41 Minuten war der Inhalt des flammabgeunteren Zwischenraumes teilweise ausgelaufen, er begann sich jedoch durch intumeszentes Aufschäumen der Füllung wieder teilweise aufzufüllen. Die Durchschnittstemperatur des Verbundes 5a) erreichte nach 44 Minuten Werte von über 180°C.

Beim Verbund 5b) zeigten sich nach 5 Minuten, ohne erkennbare Fließ- oder Auslaufprozesse, zunehmend feine Blasen in der Gelschicht, die über die gesamte Versuchsdauer hinweg zunehmend, den Charakter eines feinporigen Schaumes annahmen. Etwa ab 18 Minuten Versuchsdauer erfolgte dieser Schäumprozeß auch in der zweiten Gelschicht. Auch nach 25 bis 30 Minuten Brenndauer zeigten sich auf der Scheibenoberfläche keine ausgesprochenen Hitzeflecken. Nach 53 Minuten erreichte die äußere Scheibenoberfläche eine Durchschnittstemperatur von 180°C. Der Verbund 5b) war nunmehr kissenartig mit einem feinporigen Schaum gefüllt.

Beide Scheibenverbunde stellten noch nach 120 Minuten Brenndauer einen vollständigen Raumabschluß dar. Der Versuch wurde dann abgebrochen und die flammseitige Front nach der Abkühlung beurteilt.

Bei 5a) zeigte sich, daß gewisse Anteile der ursprünglichen Gelfüllung aus den geborstenen Scheiben nach unten abgesackt und dort verglast waren. Auf den erhaltenen Teilen der Glasscheiben hatte sich die restliche Schicht der gut netzenden Glasschmelze unter Keramisierung zu einem Schaumstoff aufgebläht.

Bei 5b) zeigte sich, daß nahezu kein Material abgesackt oder in den Brandraum ausgelaufen war und, daß die gesamte flammseitige Fläche eine Art feinporiges Schaumstoffkissen aus keramisiertem Material darstellte. Dadurch kann der Raumabschluß über lange Zeit erhalten werden.

Diese Brandversuche zeigen die deutlich verbesserte Eignung der erfindungsgemäßen Gele gemäß 5b) für Brandschutz-Gelzwischenschichten bei Brandschutzgläsern.

## Patentansprüche

1. Gelbildner, die a) saure Aluminiumphosphate, gegebenenfalls in Form von Umsetzungsprodukten mit 0,1 bis 4 Mol Alkanolamin pro Mol Aluminiumphosphat und b) Umsetzungsprodukte von Borsäure mit Alkanolaminen enthalten, dadurch gekennzeichnet, daß a) und b), gerechnet als Feststoffe, im Gewichtsverhältnis 100:95 bis 100:0,5 vorliegen und sie zusätzlich Alkaliverbindungen in einem Atomverhältnis von Aluminium zu Alkalimetall von 1:1,3 bis 2,5 enthalten.

2. Gelbildner des Anspruchs 1, dadurch gekennzeichnet, daß sie 0,5 bis 85 Gew.-% Wasser und Aluminium, Bor, Phosphor, Alkanolamin und Alkali in atomaren bzw. molaren Verhältnissen von 1 zu 1,2 bis 1,8 zu 2,7 bis 3,3 zu 2,7 bis 3,3 zu 1,4 bis 2,2 enthalten und aus den Reaktionskomponenten Aluminiumhydroxid, o-Phosphorsäure, o-Borsäure, Monoethanolamin und Natriumhydroxid hergestellt wurden.

3. Gelbildner der Ansprüche 1 und 2, dadurch gekennzeichnet, daß man zu ihrer Herstellung zusätzlich zu oder anstelle des Aluminiumhydroxids Aluminiumoxide, Aluminiumoxidhydrate, Aluminiumsalze flüchtiger Säuren und/oder Aluminiumborat, zusätzlich zu oder anstelle der o-Phosphorsäure dehydratisierte Formen der o-Phosphorsäure, Phosphoroxide, Phosphonsäuren, Phosphinsäuren, Phosphorsäureester und/oder Phosphorsäuresalze, zusätzlich zu oder anstelle der o-Borsäure dehydratisierte Formen der o-Borsäure, Boroxide, Ammoniumborate und/oder Alkanolaminborate, zusätzlich zu oder anstelle des Monoethanolamins Diethanolamin und/oder Triethanolamin einsetzt und zusätzlich zu oder anstelle der Alkalihydroxide Alkalioxide, -carbonate, -bicarbonate, -formiate, -acetate, -alkoholate, -borate und/oder -aluminate einsetzt.

4. Gelbildner der Ansprüche 1 bis 3, dadurch gekennzeichnet, daß die Zusätze von Tensiden, Haftvermittlern, Farbgebern, Porenkeimbildern, Füllstoffen, Lichtschutzmittel, Oxidationsschutzmittel und/oder Verstärker enthalten.

5. Verfahren zur Herstellung von Gelbildnern des Anspruchs 1, wobei man zunächst ein Vorprodukt herstellt, das a) saure Aluminiumphosphate und b) Umsetzungsprodukte von Borsäure mit Alkanolaminen enthält, wobei a) und b), gerechnet als Feststoffe, im Gewichtsverhältnis von 100:95 bis 100:0,5 vorliegen, dadurch gekennzeichnet, daß man diesem Vorprodukt bei 10 bis 100°C eine Alkaliverbindung in einer Menge, daß ein Atomverhältnis von Aluminium zu Alkalimetall von 1 : 1,3 bis 2,5 eingestellt wird in Form einer 50 bis 70 Gew.-%igen Lösung zufügt.

6. Verfahren zur Herstellung von Brandschutzgelen des Anspruchs 5, dadurch gekennzeichnet, daß man den Gelbildner für 30 Minuten bis 2,5 Stunden auf 50 bis 120°C erhitzt.

7. Brandschutzgele, dadurch gekennzeichnet, daß sie Gelbildner nach Anspruch 1 in gelierter Form sind.

8. Brandschutzgläser, dadurch gekennzeichnet, daß sie Brandschutzgele nach Anspruch 7 enthalten.

9. Verfahren zur Herstellung von Brandschutzgläsern des Anspruchs 8, dadurch gekennzeichnet, daß man die Gelbildung nach Anspruch 5 zwischen den Scheiben eines aus zwei oder mehreren Scheiben bestehenden Scheibenverbundes ablaufen läßt.

10. Verwendung von Gelbildnern des Anspruchs 1 zur Herstellung von Hilfsmitteln, Werkstoffen und Bauelementen für den vorbeugenden Brandschutz, als Zusätze und Aufbaukomponenten bei der Herstellung von Polyurethanschaumstoffen, bei der Herstellung von Formteilen und Leichtwerkstoffen in Kombination mit blähfähigen Materialien, in sprühgetrockneter Form als isolierende und feuerabweisende Hohlraumfüllung und Füllstoff und zur Lackierung und Beschichtung.

## Claims

1. Gel formers containing a) acid aluminium phosphates, optionally in the form of reaction products with from 0.1 to 4 mol of alkanolamine per mole of aluminium phosphate and b) reaction products of boric acid with alkanolamines, characterized in that a) and b), calculated as solids, are present in a weight ratio of from 100:95 to 100:0.5 and that they additionally contain alkali metal compounds in an atom ratio of aluminium to alkali metal of 1:1.3-2.5.

2. Gel formers of Claim 1, characterized in that they contain from 0.5 to 85 % by weight of water and aluminium, boron, phosphorus, alkanolamine and alkali metal in atomic or molar ratios of 1:1.2-1.8:2.7-3.3:2.7-3.3:1.4-2.2 and were prepared from the reaction components aluminium hydroxide, orthophosphoric acid, orthoboric acid, monoethanolamine and sodium hydroxide.

3. Gel formers of Claims 1 or 2, characterized in that they are prepared using aluminium oxides, hydrated aluminium oxides, aluminium salts of volatile acids and/or aluminium borate in addition to or in place of the aluminium hydroxide, dehydrated forms of orthophosphoric acid, phosphorus oxides, phosphonic acids, phosphinic acids, phosphoric esters and/or salts of phosphoric acid in addition to or in place of the orthophosphoric acid, dehydrated forms of orthoboric acid, boron oxides, ammonium borates and/or alkanolamine borates in addition to or in place of the orthoboric acid, diethanolamine and/or triethanolamine in addition to or in place of the monoethanolamine, and alkali metal oxides, carbonates, bicarbonates, formates, acetates, alkoxides, borates and/or aluminates in addition to or in place of the alkali metal hydroxides.

4. Gel formers of any of Claims 1 to 3, characterized in that they contain additions of surfactants, bonding agents, colorants, pore nucleus formers, fillers, light protection agents, antioxidants and/or reinforcers.

5. Process for preparing gel formers of Claim 1, where a preproduct containing a) acid aluminium phosphates and b) reaction products of boric acid with alkanolamines is first prepared, where a) and b), calculated as solids, are present in a weight ratio of from 100:95 to 100:0.5, characterized in that an alkali metal compound in the form of a from 50 to 70 % strength by weight solution is added to this preproduct at from 10 to 100°C in such an amount that the atom ratio of aluminium to alkali metal is 1:1.3-2.5.

6. Process for preparing fire-resistant gels of Claim 5, characterized in that the gel former is heated for from 30 minutes to 2.5 hours at from 50 to 120°C.

7. Fire-resistant gels, characterized in that they are gel formers according to Claim 1 in gelled form.

8. Fire-resistant glass, characterized in that it contains fire-resistant gels according to Claim 7.

9. Process for producing fire-resistant glass of Claim 8, characterized in that the gel formation according to Claim 5 is allowed to proceed between the panes of a composite pane consisting of two or more panes.

10. Use of gel formers of Claim 1 for producing auxiliaries, materials and components for preventive fire protection, as additives and formative components in the production of polyurethane foams, in the production of mouldings and lightweight materials in combination with expandable materials, in spray-dried form as insulating and fire-resistant hollow space filling and filler and for varnishing and coating.

## Revendications

1. Agents gélifiants contenant a) des phosphates d'aluminium acides, le cas échéant à l'état de produits de réaction avec 0,1 à 4 mol d'une alcanolamine par mole du phosphate d'aluminium et b) des produits de réaction de l'acide borique et d'alcanolamines, caractérisés en ce que les composants a) et b), exprimé en matières solides, sont présents dans des proportions relatives en poids de 100:95 à 100:0,5 et en ce qu'ils contiennent en outre des dérivés alcalins à un rapport atomique aluminium/métal alcalin de 1:1,3 à 2,5.

2. Agents gélifiants de la revendication 1, caractérisés en ce qu'ils contiennent de 0,5 à 85 % en poids d'eau et de l'aluminium, du bore, du phosphore une alcanolamine et un métal alcalin à des proportions atomiques ou molaires respectives de 1:1,2 à 1,8:2,7 à 3,3:2,7 à 3,3:1,4 à 2,2 et en ce qu'ils ont été préparés à partir des composants : hydroxyde d'aluminium, acide orthophosphorique, acide orthoborique, monoéthanolamine et hydroxyde de sodium.

3. Agents gélifiants des revendications 1 et 2, caractérisés en ce que, pour leur préparation, en plus de l'hydroxyde d'aluminium ou à la place de l'hydroxyde d'aluminium, on a utilisé des oxydes de l'aluminium, des oxydes hydratés de l'aluminium, des sels d'aluminium d'acides volatils et/ou du borate d'aluminium, en plus de l'acide orthophosphorique ou à la place de l'acide orthophosphorique, on a utilisé des formes déshydratées de l'acide orthophosphorique, des oxydes du phosphore, des acides phosphoniques, des acides phosphiniques, des esters phosphoriques et/ou des sels de l'acide phosphorique, en plus de l'acide orthoborique ou à la place de l'acide orthoborique, on a utilisé des formes déshydratées de l'acide orthoborique, des oxydes du bore, des borates d'ammonium et/ou des borates d'alcanolamines, en plus de la monoéthanolamine ou à la place de la monoéthanolamine on a utilisé de la diéthanolamine et/ou de la triéthanolamine et en plus des hydroxydes alcalins ou à la place des hydroxydes alcalins, on a utilisé des oxydes, carbonates, bicarbonates, formiates, acétates, alcoolates, borates et/ou aluminates alcalins.

4. Agents gélifiants des revendications 1 à 3, caractérisés en ce qu'ils contiennent en tant qu'additifs des agents tensioactifs, des adhésifs, des colorants, des agents porogènes, des matières de charge, des agents de protection contre la lumière, des agents de protection contre l'oxydation et/ou des matières renforçantes.

5. Procédé de préparation des agents gélifiants de la revendication 1, selon lequel on prépare d'abord un produit intermédiaire qui contient a) des phosphates d'aluminium acides et b) des produits de réaction de l'acide borique et d'alcanolamines, les composants a) et b) étant présents, exprimé en matières solides, à des proportions relatives en poids de 100:95 à 100:0,5, caractérisé en ce que l'on ajoute à ce produit intermédiaire à des températures de 10 à 100°C un dérivé alcalin en quantité correspondant à un rapport atomique aluminium/métal alcalin de 1:1,3 à 2,5, à l'état de solution à une concentration de 50 à 70 % en poids.

6. Procédé de préparation de gels de protection contre l'incendie de la revendication 5, caractérisé en ce que l'on chauffe l'agent gélifiant pendant 30 min à 2,5 h à des températures de 50 à 120°C.

7. Gels de protection contre l'incendie, caractérisés en ce qu'ils consistent en les agents gélifiants selon la revendication 1, à l'état gélifié.

8. Vitrages de protection contre l'incendie, caractérisés en ce qu'ils contiennent des gels de protection contre l'incendie selon la revendication 7.

9. Procédé pour la fabrication de vitrages de protection contre l'incendie de la revendication 8, caractérisé en ce que l'on procède à la formation de gel selon la revendication 5 entre les feuilles d'un verre feuilleté consistant en deux ou plusieurs feuilles.

10. Utilisation des agents gélifiants de la revendication 1, pour la fabrication de produits auxiliaires, de matériaux et d'éléments de construction destinés à protéger contre l'incendie, en tant qu'additifs et composants de synthèse à la préparation de mousse de polyuréthanne, à la fabrication de pièces moulées et de matériaux légers en combinaison avec des matières gonflables, à l'état atomisé en tant que matière de charge et garnissage isolant et ignifugeant d'espaces creux et pour l'application de revêtements et d'enductions.
